Europäisches Patentamt

**European Patent Office**

**Office européen des brevets**

(19)

(11) Numéro de publication: **0 135 449**
**B1**

(12) # FASCICULE DE BREVET EUROPÉEN

(45) Date de publication du fascicule du brevet:
**29.04.87**

(51) Int. Cl.⁴: **C 03 C 13/00**

(21) Numéro de dépôt: **84401844.0**

(22) Date de dépôt: **18.09.84**

(54) **Fibres de verre et composition convenant pour leur fabrication.**

(30) Priorité: **19.09.83 FR 8314834**

(43) Date de publication de la demande:
**27.03.85 Bulletin 85/13**

(45) Mention de la délivrance du brevet:
**29.04.87 Bulletin 87/18**

(84) Etats contractants désignés:
**AT BE CH DE FR GB IT LI LU NL SE**

(56) Documents cité:
**DE-A-1 596 771**
**FR-A-1 355 739**
**FR-A-2 521 547**
**US-A-2 882 173**
**US-A-4 451 276**

(73) Titulaire: **ISOVER SAINT- GOBAIN, Les Miroirs 18,**
**avenue d'Alsace, F-92400 Courbevoie (FR)**

(72) Inventeur: **Le Moigne épouse Rey, Simone, 44**
**avenue Camelinat, F-91200 Athis- Mons (FR)**
Inventeur: **Boivent, Marcel, 21 rue Victor Hugo,**
**F-92400 Courbevoie (FR)**
Inventeur: **Matzen, Guy, 165 rue Championet,**
**F-75018 Paris (FR)**

(74) Mandataire: **Breton, Jean- Claude, SAINT- GOBAIN**
**RECHERCHE 39, quai Lucien Lefranc, F-93300**
**Aubervilliers Cedex (FR)**

EP 0 135 449 B1

LIBER, STOCKHOLM 1987

0 135 449

## Description

La présente invention concerne des compositions de verre destinées à la fabrication de fibres. Plus particulièrement, elle a pour objet des compositions capables d'être étirées sous forme de fibres discontinues, à l'aide d'air comprimé, de jets de vapeur d'eau, de gaz chauds ou de la force centrifuge.

Les compositions de verre selon l'invention seront étirées selon un procédé qui consiste à alimenter en verre fondu un corps creux tournant à grande vitesse, et qui présente une paroi périphérique perforée de nombreux orifices au travers desquels le verre est projeté horizontalement sous l'action de la force centrifuge. Il se forme ainsi des fibres primaires qui sont ensuite étirées de haut en bas par l'action de flammes ou d'un courant gazeux.

Ce type de procédé et les dispositifs de mise en oeuvre dudit procédé sont décrits, par exemple, dans les brevets français publiés sous les numéros 1 382 917 et 2 443 436.

Les compositions de verre couramment employées pour la fabrication de fibres résultent d'un compromis entre les propriétés souhaitées pour lesdites fibres, le coût des différentes matières premières et les contraintes imposées par les dispositifs de mise en oeuvre du procédé. Ainsi, par exemple, la nature de la matière utilisée pour fabriquer le corps creux exige des verres dont les caractéristiques physiques autorisent la formation de fibres primaires à des températures inférieures à 1100°C.

La plupart des compositions de verres connues, mises au point pour la fabrication de fibres, satisfont en général les contraintes imposées mais au détriment, par exemple, de certains aspects économiques.

Ainsi, beaucoup de compositions connues comprennent un grand nombre de constituants qui imposent une multiplication des matières premières vitrifiables nécessaires à l'élaboration du verre. Cette multiplication entraine la recherche de nouvelles sources d'approvisionnement et une augmentation des frais de stockage et de manutention.

Il faut également souligner que bon nombre des constituants introduits dans les compositions connues sont issus de matières premières onéreuses. La multiplication de tels constituants et/ou leur introduction dans la composition en quantités non négligeables majorent très sensiblement le coût du verre fabriqué.

Par ailleurs, la fusion de certaines compositions connues dans des fours chauffés au gaz provoquent souvent le départ de matières volatiles. Cette volatilisation conduit à augmenter dans le mélange vitrifiable la proportion des constituants les plus volatils et à installer des dispositifs d'épuration des fumées.

L'utilisation relativement récente des fours électriques à conduit à une réduction des pertes par volatilisation. Cependant bien des compositions connues, très satisfaisantes à maints égards, ne sont pas adaptées à la fusion électrique. Lorsque ces compositions sont fondues dans des fours électriques, on observe que la couche de mélange vitrifiable qui recouvre le bain de verre n'est pas stable. Il se forme des poches gazeuses qui éclatent et qui découvrent de manière intermittente la surface du verre. Ces phénomènes occasionnent des pertes thermiques non négligeables ainsi que des pertes de matières par volatilisation qui, bien que moins importantes que celles observées dans les fours chauffés au gaz, sont encore génantes.

L'invention a pour objet des compositions de verres qui autorisent une fusion stable et régulière dans des fours électriques.

L'invention concerne aussi des compositions de verre dont le nombre de constituants est limité et qui ne comprennent que très peu de constituants onéreux lesquels sont introduits en faible quantité.

L'invention vise également des compositions de verre qui présentent d'excellentes caractéristiques de viscosité et de dévitrification.

Les compositions de verre selon l'invention répondent à certains des objectifs fixés grâce à l'introduction systématique de fluor dans lesdites compositions.

La Demanderesse a constaté sans pouvoir l'expliquer complètement que l'introduction de ce constituant avait pour effet d'assurer un échappement régulier des gaz provenant de la décomposition des matières premières, et, de ce fait, une fusion particulièrement stable.

Les caractéristiques de viscosité et de dévitrification des verres de l'invention sont notamment régies par l'introduction des oxydes alcalins $Na_2O$ et $K_2O$ et par celle de $B_2O_3$ et de fluor.

L'influence respective du bore et du fluor sur la viscosité du verre est telle que ces deux constituants sont introduits dans la composition en prenant en considération l'effet respectif de chacun d'entre eux.

Pour contrôler avec précision l'effet global du bore et du fluor sur la viscosité tout en maintenant ces deux constituants dans des proportions pondérales économiquement acceptables, ceux-ci sont introduits dans les compositions en respectant l'inégalité suivante

$3\% \leqslant B_2O_3 + 1,5\,F \leqslant 6,5\%$

le facteur affectant le fluor permet de pondérer l'influence de ce constituant sur la viscosité et de la comparer directement à celle du bore. Ainsi, par exemple, 2 % en poids de fluor dans le verre ont pratiquement le même effet sur sa viscosité que 3 % en poids de $B_2O_3$.

Le respect de cette inégalité permet également d'optimiser l'influence du bore et du fluor sur la dévitrification, et concourt à l'obtention de verres commençant à cristalliser à des températures exceptionnellement basses.

Pour abaisser la viscosité tout en obtenant d'excellentes caractéristiques de dévitrification, les compositions de l'invention comprennent, outre le bore et le fluor, les oxydes alcalins $Na_2O$ et $K_2O$ qui sont introduits selon des proportions pondérales telles qu'elles respectent l'inégalité suivante:

$16\% < Na_2O + K_2O < 20\%$

2

D'une manière générale les compositions des fibres de verre selon l'invention comprennent les constituants suivants selon les proportions données ci-après:

| | | | |
|---|---|---|---|
| $SiO_2$ | 57 | à 70 | % |
| $Al_2O_3$ | 2 | à 7 | % |
| $CaO$ | 5 | à 10 | % |
| $MgO$ | 0 | à 4 | % |
| $B_2O_3$ | 0 | à 4,5 | % |
| F | 0,5 | à 4 | % |

en ajoutant les oxydes alcalins $Na_2O$ et $K_2O$ dans des proportions pondérales définies par l'inégalité précitée, $B_2O_3$ et F obéissant à l'inégalité déjà exposée.

Les fibres de verre de l'invention ont de préférence des compositions comprenant les constituants déjà cités selon les proportions ci-après définissant les deux domaines suivants:

| | | | |
|---|---|---|---|
| $SiO_2$ | 60 | à 67 | % |
| $Al_2O_3$ | 3 | à 5 | % |
| $CaO$ | 6 | à 9 | % |
| $MgO$ | 0,5 | à 3,5 | % |
| $B_2O_3$ | 0 | à 4,5 | % |
| F | 0,5 | à 4 | % |

et :

| | | | |
|---|---|---|---|
| $SiO_2$ | 62 | à 67 | % |
| $Al_2O_3$ | 3 | à 4,5 | % |
| $CaO$ | 7 | à 8 | % |
| $MgO$ | 2 | à 3,5 | % |
| $B_2O_3$ | 0 | à 4,5 | % |
| F | 1 | à 4 | % |

Ces différentes compositions comprennent également les oxydes $Na_2O$ et $K_2O$ selon des proportions définies par l'inégalité citée précédemment.

Deux domaines renfermant des compositions avantageuses sont ainsi délimitées:

| | | | |
|---|---|---|---|
| $SiO_2$ | 62 | à 67 | % |
| $Al_2O_3$ | 3 | à 4,5 | % |
| CaO | 7 | à 8 | % |
| MgO | 2 | à 3,5 | % |
| $Na_2O$ | 14 | à 17 | % |
| $K_2O$ | 0,5 | à 3,5 | % |
| $B_2O_3$ | 0 | à 4,5 | % |
| F | 1 | à 4 | % |

et :

| | | | |
|---|---|---|---|
| $SiO_2$ | 62 | à 67 | % |
| $Al_2O_3$ | 3 | à 4,5 | % |
| CaO | 7 | à 8 | % |
| MgO | 2 | à 3,5 | % |
| $Na_2O$ | 15 | à 16,5 | % |
| $K_2O$ | 1 | à 2,5 | % |
| $B_2O_3$ | 0 | à 4,5 | % |
| F | 1,5 | à 4 | % |

Les compositions de ces deux derniers domaines qui présentent les meilleures caractéristiques sont celles respectant l'inégalité:

$$4 \leqslant B_2O_3 + 1,5\,F \leqslant 6$$

D'une manière générale, les compositions de l'invention qui présentent le plus grand intérêt, au plan des caractéristiques de viscosité et dévitrification et au plan économique, sont celles qui renferment du bore et du fluor selon des proportions pondérales régies par la relation:

$$B_2O_3 + 1,5\,F = 4,5\,\%$$

Les caractéristiques des compositions de l'invention seront mieux appréciées au travers des exemples suivants.

**EXEMPLE 1**

Composition

| | |
|---|---|
| $SiO_2$ | 64,55 % |
| $Al_2O_3$ | 3,35 % |
| CaO | 7,25 % |
| MgO | 3,00 % |
| $Na_2O$ | 15,60 % |
| $K_2O$ | 1,35 % |
| $B_2O_3$ | 3,60 % |
| F | 0,60 % |
| Impuretés | 0,95 % |
| $O_2$ à déduire | 0,25 % |

Propriétés physiques

Viscosité

| | |
|---|---|
| Temp. pour 100 Poises | 1320°C |
| 1000 Poises | 1075°C |
| 10000 Poises | 930°C |

Dévitrification

| | |
|---|---|
| Temp. sup. de dévitrif. | 955°C |
| Temp. vit. nulle | 900°C |
| Temp. vit. max. | 820°C |
| Vit. max. (µm/min) | 0,60 |

| | |
|---|---|
| Temp. ( 1000 Poises) - TSD | 120°C |
| Temp. (10000 Poises) - T.vit.nulle | 30°C |

4

**EXEMPLE 2**

| Composition | | | Propriétés physiques | | |
|---|---|---|---|---|---|
| SiO$_2$ | 63,00 % | | Viscosité | | |
| Al$_2$O$_3$ | 3,60 % | | Temp. pour 100 Poises | | 1286°C |
| CaO | 7,95 % | | 1000 Poises | | 1054°C |
| MgO | 3,00 % | | 10000 Poises | | 911°C |
| Na$_2$O | 14,35 % | | Dévitrification | | |
| K$_2$O | 2,45 % | | Temp. sup. de dévitrif. | | 940°C |
| B$_2$O$_3$ | 4,50 % | | Temp. vit. nulle | | 890°C |
| F | 1,15 % | | Temp. vit. max. | | 800°C |
| Impuretés | 0,48 % | | Vit. max. (µm/min) | | 0,33 |
| O$_2$ à déduire | 0,48 % | | | | |

Temp. ( 1000 Poises) - TSD          114°C

Temp. (10000 Poises) - T.vit.nulle   21°C

**EXEMPLE 3**

| Composition | | | Propriétés physiques | | |
|---|---|---|---|---|---|
| SiO$_2$ | 64,10 % | | Viscosité | | |
| Al$_2$O$_3$ | 3,30 % | | Temp. pour 100 Poises | | 1308°C |
| CaO | 7,85 % | | 1000 Poises | | 1072°C |
| MgO | 2,90 % | | 10000 Poises | | 924°C |
| Na$_2$O | 15,80 % | | Dévitrification | | |
| K$_2$O | 1,35 % | | Temp. sup. de dévitrif. | | 940°C |
| B$_2$O$_3$ | 2,95 % | | Temp. vit. nulle | | 900°C |
| F | 0,95 % | | Temp. vit. max. | | 820°C |
| Impuretés | 1,20 % | | Vit. max. (µm/min) | | 0,67 |
| O$_2$ à déduire | 0,40 % | | | | |

Temp. ( 1000 Poises) - TSD          132°C

Temp. (10000 Poises) - T.vit.nulle   24°C

**EXEMPLE 4**

| Composition | | | Propriétés physiques | | |
|---|---|---|---|---|---|
| | | | Viscosité | | |
| SiO$_2$ | 64,50 % | | Temp. pour | 100 Poises | 1296°C |
| Al$_2$O$_3$ | 3,40 % | | | 1000 Poises | 1050°C |
| CaO | 7,25 % | | | 10000 Poises | 902°C |
| MgO | 3,10 % | | Dévitrification | | |
| Na$_2$O | 15,65 % | | Temp. sup. de dévitrif. | | 910°C |
| K$_2$O | 1,40 % | | Temp. vit. nulle | | 855°C |
| B$_2$O$_3$ | 2,50 % | | Temp. vit. max. | | 800°C |
| F | 2,02 % | | Vit. max. (μm/min) | | 1,00 |
| Impuretés | 1,03 % | | | | |
| O$_2$ à déduire | 0,85 % | | | | |

Temp. ( 1000 Poises) - TSD              140°C

Temp. (10000 Poises) - T.vit.nulle    47°C

**EXEMPLE 5**

| Composition | | | Propriétés physiques | | |
|---|---|---|---|---|---|
| | | | Viscosité | | |
| SiO$_2$ | 65,90 % | | Temp. pour | 100 Poises | 1320°C |
| Al$_2$O$_3$ | 3,35 % | | | 1000 Poises | 1077°C |
| CaO | 7,50 % | | | 10000 Poises | 921°C |
| MgO | 3,10 % | | Dévitrification | | |
| Na$_2$O | 15,95 % | | Temp. sup. de dévitrif. | | 920°C |
| K$_2$O | 1,45 % | | Temp. vit. nulle | | 870°C |
| B$_2$O$_3$ | - | | Temp. vit. max. | | 820°C |
| F | 2,60 % | | Vit. max. (μm/min) | | 1,84 |
| Impuretés | 1,24 % | | | | |
| O$_2$ à déduire | 1,09 % | | | | |

Temp. ( 1000 Poises) - TSD              157°C

Temp. (10000 Poises) - T.vit.nulle    51°C

**EXEMPLE 6**

Composition

| | |
|---|---|
| SiO2 | 65,50 % |
| Al2O3 | 3,35 % |
| CaO | 7,50 % |
| MgO | 3,10 % |
| Na2O | 15,70 % |
| K2O | 1,45 % |
| B2O3 | - |
| F | 3,75 % |
| Impuretés | 1,23 % |
| O2 à déduire | 1,58 % |

Propriétés physiques

Viscosité

| Temp. pour | 100 Poises | 1290°C |
|---|---|---|
| | 1000 Poises | 1053°C |
| | 10000 Poises | 900°C |

Dévitrification

| Temp. sup. de dévitrif. | 925°C |
|---|---|
| Temp. vit. nulle | 865°C |
| Temp. vit. max. | 780°C |
| Vit. max. (µm/min) | 0,27 |

Temp. ( 1000 Poises) - TSD          188°C

Temp. (10000 Poises) - T.vit.nulle    35°C

**EXEMPLE 7**

Composition

| | |
|---|---|
| SiO2 | 64,25 % |
| Al2O3 | 3,40 % |
| CaO | 7,00 % |
| MgO | 3,05 % |
| Na2O | 15,55 % |
| K2O | 1,50 % |
| B2O3 | 3,30 % |
| F | 1,20 % |
| Impuretés | 1,25 % |
| O2 à déduire | 0,50 % |

Propriétés physiques

Viscosité

| Temp. pour | 100 Poises | 1332°C |
|---|---|---|
| | 1000 Poises | 1087°C |
| | 10000 Poises | 932°C |

Dévitrification

| Temp. sup. de dévitrif. | 920°C |
|---|---|
| Temp. vit. nulle | 880°C |
| Temp. vit. max. | 820°C |
| Vit. max. (µm/min) | 0,54 |

Temp. ( 1000 Poises) - TSD          167°C

Temp. (10000 Poises) - T.vit.nulle    52°C

**EXEMPLE 8**

| Composition | | | Propriétés physiques | | |
|---|---|---|---|---|---|
| SiO$_2$ | 65,10 % | | Viscosité | | |
| Al$_2$O$_3$ | 3,20 % | | Temp. pour | 100 Poises | 1315°C |
| CaO | 6,90 % | | | 1000 Poises | 1080°C |
| MgO | 2,90 % | | | 10000 Poises | 930°C |
| Na$_2$O | 15,60 % | | Dévitrification | | |
| K$_2$O | 1,35 % | | Temp. sup. de dévitrif. | | 870°C |
| B$_2$O$_3$ | 2,95 % | | Temp. vit. nulle | | 830°C |
| F | 1,05 % | | Temp. vit. max. | | 800°C |
| Impuretés | 1,39 % | | Vit. max. (µm/min) | | 0,44 |
| O$_2$ à déduire | 0,44 % | | | | |

Temp. ( 1000 Poises) - TSD          250°C

Temp. (10000 Poises) - T.vit.nulle  100°C

**EXEMPLE 9**

| Composition | | | Propriétés physiques | | |
|---|---|---|---|---|---|
| SiO$_2$ | 64,85 % | | Viscosité | | |
| Al$_2$O$_3$ | 3,35 % | | Temp. pour | 100 Poises | 1324°C |
| CaO | 7,40 % | | | 1000 Poises | 1083°C |
| MgO | 2,90 % | | | 10000 Poises | 933°C |
| Na$_2$O | 15,20 % | | Dévitrification | | |
| K$_2$O | 1,40 % | | Temp. sup. de dévitrif. | | 940°C |
| B$_2$O$_3$ | 3,00 % | | Temp. vit. nulle | | 870°C |
| F | 1,15 % | | Temp. vit. max. | | 820°C |
| Impuretés | 1,23 % | | Vit. max. (µm/min) | | 0,67 |
| O$_2$ à déduire | 0,48 % | | | | |

Temp. ( 1000 Poises) - TSD          213°C

Temp. (10000 Poises) - T.vit.nulle  63°C

**EXEMPLE 10**

| Composition | | | Propriétés physiques | | |
|---|---|---|---|---|---|

Composition

| | |
|---|---|
| SiO$_2$ | 69,00 % |
| Al$_2$O$_3$ | 2,00 % |
| CaO | 5,00 % |
| MgO | – |
| Na$_2$O | 16,00 % |
| K$_2$O | 3,70 % |
| B$_2$O$_3$ | 2,50 % |
| F | 2,00 % |
| Impuretés | 0,64 % |
| O$_2$ à déduire | 0,84 % |

Propriétés physiques

Viscosité

| Temp. pour | 100 Poises | 1294°C |
|---|---|---|
| | 1000 Poises | 1054°C |
| | 10000 Poises | 906°C |

Dévitrification

| Temp. sup. de dévitrif. | 970°C |
|---|---|
| Temp. vit. nulle | 870°C |
| Temp. vit. max. | 820°C |
| Vit. max. (μm/min) | 0,12 |

| Temp. ( 1000 Poises) – TSD | 84°C |
|---|---|
| Temp. (10000 Poises) – T.vit.nulle | 36°C |

Les compositions des fibres de verre selon l'invention présentent un certain nombre de caractéristiques remarquables ainsi qu'il ressort notamment de l'examen des exemples précédents.

Ces verres présentent une faible viscosité; pour prendre un point de repère bien connu, la viscosité de 1000 poises, la température correspondante pour les verres de l'invention est inférieure ou égale à 1100°C.

De plus ces verres dévitrifient à des températures exceptionnellement basses. En effet, la température supérieure de dévitrification est généralement inférieure à 980°C et dans la majorité des cas inférieure à 960°C.

L'écart entre la température correspondant à 1000 poises et la température supérieure de dévitrification est généralement supérieur à 100°C et dépasse même parfois 200°C.

La température correspondant à la vitesse de croissance nulle, appelée couramment liquidus, est généralement inférieure à 920°C et dans la majorité des cas inférieure ou égale à 900°C.

L'écart entre la température correspondant à la viscosité de 10000 poises et le liquidus est toujours largement positif. Cet écart est un critère important pour juger de l'aptitude au fibrage, pour des procédés de fibrage par centrifugation décrits par exemple dans les brevets précités, vis-à-vis de la dévitrification. En effet, lorsque cet écart est positif, les risques de dévitrification dans le dispositif de fibrage sont pratiquement nuls.

Enfin, la température correspondant à la vitesse maximale de croissance des cristaux est généralement inférieure à 840°C et très souvent inférieure ou égale à 820°C.

Quant à la vitesse maximale, elle reste dans des limites normalement admises pour ce genre de verres.

Grâce à cet ensemble de caractéristiques, les verres de l'invention conviennent particulièrement bien à la fabrication de fibres discontinues, susceptibles de rentrer dans la constitution de matériaux destinés notamment à l'isolation thermique et/ou acoustique.

**Revendications**

1. Fibres de verre, caractérisées par le fait qu'elles renferment les constituants suivants selon les proportions pondérales ci-après:

| | | | | |
|---|---|---|---|---|
| SiO$_2$ | 57 | à | 70 | % |
| Al$_2$O$_3$ | 2 | à | 7 | % |
| CaO | 5 | à | 10 | % |
| MgO | 0 | à | 4 | % |
| B$_2$O$_3$ | 0 | à | 4,5 | % |
| F | 0,5 | à | 4 | % |

ces deux derniers constituants étant incorporés selon des proportions pondérales régies par l'inégalité:

$3\% \leqslant B_2O_3 + 1,5\,F \leqslant 6,5\%$

lesdites fibres renfermant également les oxydes alcalins $Na_2O$ et $K_2O$ selon les proportions pondérales satisfaisant l'inégalité:

$16\% < Na_2O + K_2O < 20\%$

2. Fibres de verre selon la revendication 1, caractérisées par le fait qu'elles renferment les constituants suivants selon les proportions pondérales ci-après:

| | | | |
|---|---|---|---|
| $SiO_2$ | 60 | ã 67 | % |
| $Al_2O_3$ | 3 | ã 5 | % |
| $CaO$ | 6 | ã 9 | % |
| $MgO$ | 0,5 | ã 3,5 | % |
| $B_2O_3$ | 0 | ã 4,5 | % |
| $F$ | 0,5 | ã 4 | % |

avec:

$3\% \leqslant B_2O_3 + 1,5\,F \leqslant 6,5\%$

et:

$16\% < Na_2O + K_2O < 20\%$

3. Fibres de verre selon l'une des revendications précédentes, caractérisées par le fait qu'elles renferment les constituants suivants selon les proportions pondérales ci-après:

| | | | |
|---|---|---|---|
| $SiO_2$ | 62 | ã 67 | % |
| $Al_2O_3$ | 3 | ã 4,5 | % |
| $CaO$ | 7 | ã 8 | % |
| $MgO$ | 2 | ã 3,5 | % |
| $B_2O_3$ | 0 | ã 4,5 | % |
| $F$ | 1 | ã 4 | % |

avec:

$3\% \leqslant B_2O_3 + 1,5\,F \leqslant 6,5\%$

et:

$16\% < Na_2O + K_2O < 20\%$

4. Fibres de verre selon l'une des revendications précédentes, caractérisées par le fait qu'elles renferment les constituants suivants selon les proportions pondérales ci-après:

| | | | |
|---|---|---|---|
| $SiO_2$ | 62 | ã 67 | % |
| $Al_2O_3$ | 3 | ã 4,5 | % |
| $CaO$ | 7 | ã 8 | % |
| $MgO$ | 2 | ã 3,5 | % |
| $Na_2O$ | 14 | ã 17 | % |
| $K_2O$ | 0,5 | ã 3,5 | % |
| $B_2O_3$ | 0 | ã 4,5 | % |
| $F$ | 1 | ã 4 | % |

avec:

$3\% \leqslant B_2O_3 + 1,5\,F \leqslant 6,5\%$

5. Fibres de verre selon la revendication 4, caractérisées par le fait qu'elles renferment les constituants suivants selon les proportions pondérales ci-après:

| | | | | |
|---|---|---|---|---|
| $SiO_2$ | 62 | ã | 67 | % |
| $Al_2O_3$ | 3 | ã | 4,5 | % |
| CaO | 7 | ã | 8 | % |
| MgO | 2 | ã | 3,5 | % |
| $Na_2O$ | 15 | ã | 16,5 | % |
| $K_2O$ | 1 | ã | 2,5 | % |
| $B_2O_3$ | 0 | ã | 4,5 | % |
| F | 1,5 | ã | 4 | % |

avec:

$3\% \leqslant B_2O_3 + 1,5\,F < 6,5\%$

6. Fibres de verre selon la revendication 5, caractérisées par le fait qu'elles renferment du bore et du fluor selon des proportions pondérales régies par l'inégalité suivante:

$4\% \leqslant B_2O_3 + 1,5\,F \leqslant 6\%$

7. Fibres de verre selon l'une des revendications précédentes, caractérisées par le fait qu'elles renferment du bore et du fluor selon des proportions pondérales régies par la relation ci-après:

$B_2O_3 + 1,5\,F = 4,5\%$

8. Matériau destiné à l'isolation thermique et/ou acoustique, caractérisé en ce qu'il comprend des fibres de verre dont la composition est définie par l'une quelconque des revendications précédentes.

## Patentansprüche

1. Glasfasern, dadurch gekennzeichnet, daß sie folgende Bestandteile gemäß der folgenden Gewichtsverhältnisse enthalten:

| | | | | |
|---|---|---|---|---|
| $SiO_2$ | 57 | bis | 70 | % |
| $Al_2O_3$ | 2 | bis | 7 | % |
| CaO | 5 | bis | 10 | % |
| MgO | 0 | bis | 4 | % |
| $B_2O_3$ | 0 | bis | 4,5 | % |
| F | 0,5 | bis | 4 | %, |

wobei die beiden letzten Bestandteile gemäß der durch die Ungleichung

$3\% \leqslant B_2O_3 + 1,5\,F \leqslant 6,5\%$

definierten Gewichtsverhältnisse beigemengt sind und die Fasern dabei die Alkalioxyde $Na_2O$ und $K_2O$ enthalten, deren Gewichtsverhältnisse die Ungleichung

$16\% < Na_2O + K_2O < 20\%$

erfüllen.

2. Glasfasern nach Anspruch 1, dadurch gekennzeichnet, daß sie folgende Bestandteile gemäß der folgenden Gewichtsverhältnisse enthalten:

| | | | | |
|---|---|---|---|---|
| $SiO_2$ | 60 | bis | 67 | % |
| $Al_2O_3$ | 3 | bis | 5 | % |
| CaO | 6 | bis | 9 | % |
| MgO | 0,5 | bis | 3,5 | % |
| $B_2O_3$ | 0 | bis | 4,5 | % |
| F | 0,5 | bis | 4 | % |

mit:

$3\% \leqslant B_2O_3 + 1,5\,F \leqslant 6,5\%$

und:

$16\% < Na_2O + K_2O < 20\%.$

3. Glasfasern nach einem der vorherigen Ansprüche, dadurch gekennzeichnet, daß sie folgende Bestandteile gemäß der folgenden Gewichtsverhältnisse enthalten:

| | |
|---|---|
| $SiO_2$ | 62 bis 67 % |
| $Al_2O_3$ | 3 bis 4,5% |
| CaO | 7 bis 8 % |
| MgO | 2 bis 3,5% |
| $B_2O_3$ | 0 bis 4,5% |
| F | 1 bis 4 % |

mit:
$3\% \leqslant B_2O_3 + 1,5\,F \leqslant 6,5\%$
und:
$16\% < Na_2O + K_2O < 20\%$.

4. Glasfasern nach einem der vorherigen Ansprüche, dadurch gekennzeichnet, daß sie folgende Bestandteile gemäß der folgenden Gewichtsverhältnisse enthalten:

| | |
|---|---|
| $SiO_2$ | 62 bis 67 % |
| $Al_2O_3$ | 3 bis 4,5% |
| CaO | 7 bis 8 % |
| MgO | 2 bis 3,5% |
| $Na_2O$ | 14 bis 17 % |
| $K_2O$ | 0,5 bis 3,5% |
| $B_2O_3$ | 0 bis 4,5% |
| F | 1 bis 4 % |

mit:
$3\% \leqslant B_2O_3 + 1,5\,F \leqslant 6,5\%$.

5. Glasfasern nach Anspruch 4, dadurch gekennzeichnet, daß sie folgende Bestandteile gemäß der folgenden Gewichtsverhältnisse enthalten:

| | |
|---|---|
| $SiO_2$ | 62 bis 67 % |
| $Al_2O_3$ | 3 bis 4,5% |
| CaO | 7 bis 8 % |
| MgO | 2 bis 3,5% |
| $Na_2O$ | 15 bis 16,5% |
| $K_2O$ | 1 bis 2,5% |
| $B_2O_3$ | 0 bis 4,5% |
| F | 1,5 bis 4% |

mit:
$3\% \leqslant B_2O_3 + 1,5\,F \leqslant 6,5$.

6. Glasfasern nach Anspruch 3, dadurch gekennzeichnet, daß sie Bor und Fluor in Gewichtsverhältnissen enthalten, die durch folgende Ungleichung bestimmt sind:
$4,\% \leqslant B_2O_3 + 1,5\,F \leqslant 6\%$.

7. Glasfasern nach einem der vorherigen Ansprüche, dadurch gekennzeichnet, daß sie Bor und Fluor in Gewichtsverhältnissen enthalten, die durch folgende Gleichung bestimmt sind:
$B_2O_3 + 1,5\,F = 4,5\%$.

8. Material bestimmt für die thermische und/oder akustische Isolation, dadurch gekennzeichnet, daß es Glasfasern enthält, deren Zusammensetzung durch irgendeinen der vorherigen Ansprüche definiert ist.

**Claims**

1. Glass fibres characterized in that they contain the following constituents in the following proportions by weight:

| | | | | |
|---|---|---|---|---|
| $SiO_2$ | .57 | to | 70 | % |
| $Al_2O_3$ | 2 | to | 7 | % |
| CaO | 5 | to | 10 | % |
| MgO | 0 | to | 4 | % |
| $B_2O_3$ | 0 | to | 4.5 | % |
| F | 0.5 | to | 4 | % |

these latter two constituents being incorporated according to proportions by weight governed by the inequality:

$3\% \leqslant B_2O_3 + 1.5\,F \leqslant 6.5\%$

the said fibres likewise containing the alkaline oxides $Na_2O$ and $K_2O$ in the proportions by weight which satisfy the inequality:

$16\% < Na_2O + K_2O < 20\%$.

2. Glass fibres according to Claim 1, characterized in that they contain the following consitituents in the following proportions by weight:

| | | | |
|---|---|---|---|
| $SiO_2$ | 60 | to | 67 % |
| $Al_2O_3$ | 3 | to | 5% |
| CaO | 6 | to | 9% |
| MgO | 0.5 | to | 3.5% |
| $B_2O_3$ | 0 | to | 4.5% |
| F | 0.5 | to | 4 % |

with:

$3\% \leqslant B_2O_3 + 1.5\,F \leqslant 6.5\%$

and:

$16\% < Na_2O + K_2O < 20\%$.

3. Glass fibres according to one of the preceding Claims, characterized in that they contain the following constituents in the following proportions by weight:

| | | | | |
|---|---|---|---|---|
| $SiO_2$ | 62 | to | 67 | % |
| $Al_2O_3$ | 3 | to | 4.5 | % |
| CaO | 7 | to | 8 | % |
| MgO | 2 | to | 3.5 | % |
| $B_2O_3$ | 0 | to | 4.5 | % |
| F | 1 | to | 4 | % |

with:

$3\% \leqslant B_2O_3 + 1.5\,F \leqslant 6.5\%$

and

$16\% < Na_2O + K_2O < 20\%$.

4. Glass fibres according to one of the preceding Claims, characterized in that they contain the following constitutents in the following proportions by weight:

| | | | | |
|---|---|---|---|---|
| $SiO_2$ | 62 | to | 67 | % |
| $Al_2O_3$ | 3 | to | 4.5 | % |
| CaO | 7 | to | 8 | % |
| MgO | 2 | to · | 3.5 | % |
| $Na_2O$ | 14 | to | 17 | % |
| $K_2O$ | 0.5 | to | 3.5 | % |
| $B_2O_3$ | 0 | to · | 4.5 | % |
| F | 1 | to | 4 | % |

with:
$3\% \leqslant B_2O_3 + 1.5\,F \leqslant 6.5\%$.

5. Glass fibres according to Claim 4, characterized in that they contain the following constituents in the following proportions by weight:

| | | | | |
|---|---|---|---|---|
| $SiO_2$ | 62 | to | 67 | % · |
| $Al_2O_3$ | 3 | to | 4.5 | % |
| CaO | · 7 | to | 8 | % |
| MgO | 2 | to | 3.5 | % |
| $Na_2O$ | 15 | to | 16.5% | |
| $K_2O$ | 1 | to | 2.5 | % |
| $B_2O_3$ | 0 | to | 4.5 | % |
| F | 1.5 | to | 4 | % |

with:
$3\% \leqslant B_2O_3 + 1.5\,F \leqslant 6.5\%$

6. Glass fibres according to Claim 5, characterized in that they contain boron and fluorine in proportions by weight governed by the following inequality:
$4\% \leqslant B_2O_3 + 1.5\,F \leqslant 6\%$

7. Glass fibres according to one of the preceding Claims, characterized in that they contain boron and fluorine in proportions by weight governed by the following equation:
$B_2O_3 + 1.5\,F = 4.5\%$

8. Material intended for thermal and/or acoustic insulation, characterized in that it comprises glass fibres, the composition of which is defined by any one of the preceding Claims.